# FASCICULE DE BREVET EUROPEEN

(11) **EP 0 733 650 B1**
(45) Date de publication et mention de la délivrance du brevet: **12.05.1999**
(21) Numéro de dépôt: 96200514.6
(22) Date de dépôt: 28.02.1996
(51) Int. Cl.: C08F 4/623, C08F 10/02

(54) **Solide catalytique pour la (co)polymérisation d'éthylène, procédé pour sa préparation, système catalytique pour la (co)polymérisation d'éthylène et procédé de (co)polymérisation d'éthylène**
Fester Katalysatorbestandteil für die (Co)Polymerisation von Ethylen, Verfahren zu seiner Herstellung, Katalysator für die (Co)Polymerisation von Ethylen und Verfahren zur Ethylen (Co)Polymerisation
Solid catalyst for (co)polymerizing ethylene, process for its preparation, catalyst system for the (co)polymerization of ethylene and process for the (co)polymerization of ethylene

(30) Priorité: 13.03.1995 BE 9500216
(43) Date de publication de la demande: 25.09.1996
(73) Titulaire: SOLVAY POLYOLEFINS EUROPE - BELGIUM (Société Anonyme), 1050 Bruxelles (BE)
(72) Inventeur: Lhost, Olivier, B-7000 Mons (BE); Zandona, Nicola, B-1410 Waterloo (BE)
(74) Mandataire: Destryker, Elise Martine

(56) Documents cités:
- EP-A- 0 090 374
- EP-A- 0 339 571
- EP-A- 0 613 908
- MAKROMOL. CHEM., RAPID COMMUN, vol. 13, no. 1, Janvier 1992, pages 21-24, XP000260845 CORRADINI PAOLO: "Hydrooligomerization of propene"

## Description

La présente invention concerne un solide catalytique mixte pour la (co)polymérisation d'éthylène contenant à la fois un métallocène et un catalyseur d'un métal du groupe VIB du tableau périodique, en particulier du chrome. Elle concerne en outre un procédé de préparation de ce solide catalytique, un système catalytique pour la (co)polymérisation d'éthylène comprenant ce solide catalytique et un procédé de (co)polymérisation d'éthylène au moyen du système catalytique.

Différents types de catalyseurs sont connus pour la polymérisation d'éthylène tels que par exemple les catalyseurs à base de chrome, les catalyseurs à base de titane ou les métallocènes, les caractéristiques du polyéthylène obtenu étant déterminées notamment par la nature du catalyseur utilisé.

Afin d'obtenir un copolymère d'alpha-oléfines de large distribution des masses moléculaires, on a déjà proposé dans la demande de brevet PCT-A-92/15619 d'utiliser un procédé en deux étapes dans lequel on polymérise au moins deux alpha-oléfines dans la première étape au moyen d'un métallocène et d'un aluminoxane et on poursuit la polymérisation dans la deuxième étape en présence du polymère issu de la première étape. Ce procédé connu nécessite une installation complexe comportant deux réacteurs de polymérisation reliés entre eux.

Par ailleurs, dans la demande de brevet EP-A-339571 on propose d'utiliser un catalyseur comprenant :
(a) un composé de chrome déposé sur un support poreux en oxyde inorganique,
(b) un composé de métal de transition (tel que par exemple le biscyclopentadiényldichlorozirconium), et
(c) un aluminoxane,
pour la fabrication de polyéthylène de large distribution des masses moléculaires. L'utilisation de ce catalyseur connu pour la polymérisation d'éthylène présente l'inconvénient de conduire, dans certaines conditions, à des polyéthylènes d'indice de fluidité trop faible pour pouvoir être mis en oeuvre dans des procédés tels que l'injection, le soufflage, etc.

La présente invention vise à remédier aux inconvénients précités en fournissant un solide catalytique nouveau permettant l'obtention de polyéthylènes de large distribution des masses moléculaires et d'indice de fluidité relativement élevé, qui sont aptes à la mise en oeuvre ultérieure aisée dans des procédés tels que l'injection etc.

A cet effet, l'invention concerne un solide catalytique pour la (co)polymérisation d'éthylène comprenant au moins un support inorganique, au moins un métallocène d'un métal de transition, au moins un agent ionisant et au moins un composé d'un métal du groupe VIB du tableau périodique.

Une caractéristique importante de l'invention réside dans la combinaison de deux catalyseurs de nature différente et connus en tant que tels dans un seul solide catalytique, à savoir un métallocène à base d'un métal de transition (qui est ionisé sous l'effet d'un agent ionisant) et un catalyseur à base d'un métal du groupe VIB du tableau périodique. La demanderesse a constaté que ces deux catalyseurs sont compatibles de manière à ce qu'ils peuvent être activés simultanément en présence l'un de l'autre pour la (co)polymérisation d'éthylène.

Une des caractéristiques essentielles de l'invention réside dans l'utilisation d'un agent ionisant qui a pour fonction d'ioniser le métallocène et de le rendre ainsi actif en (co)polymérisation d'éthylène. La demanderesse a constaté que l'utilisation d'un métallocène à l'état ionisé (formé sous l'effet de l'agent ionisant) en combinaison avec un catalyseur au chrome permet généralement d'obtenir des polyéthylènes d'indice de fluidité plus élevé (et donc plus faciles à mettre en oeuvre) par rapport aux catalyseurs connus de ce type dans lesquels le métallocène n'est pas ionisé, lorsqu'ils sont utilisés dans les mêmes conditions de polymérisation.

Selon l'invention, on entend désigner par agent ionisant, un composé comprenant une première partie qui présente les propriétés d'un acide de Lewis et qui est capable d'ioniser le métallocène en un métallocène cationique, et une deuxième partie, qui est inerte vis-à-vis du métallocène ionisé, et qui est capable de stabiliser le métallocène ionisé.

L'agent ionisant peut être un composé ionique comprenant un cation présentant les propriétés d'un acide de Lewis, et un anion constituant la deuxième partie précitée de l'agent ionisant. Les anions ayant conduit à de très bons résultats sont les anions organoboriques. On entend désigner par anion organoborique un anion dérivé du bore, dans lequel l'atome de bore est lié à 4 substituants organiques. Des exemples d'acides de Lewis cationiques sont le carbénium, le sulfonium, l'oxonium, l'anilinium, l'ammonium et le cation de lithium. Le carbénium est préféré. On peut citer comme exemples d'agents ionisants ioniques, le triphénylcarbénium tétrakis-(pentafluorophényl)borate, le N,N-diméthylanilinium tétrakis(pentafluorophényl)borate, le tri(n-butyl)ammonium tétrakis(pentafluorophényl)borate et le lithiumtétrakis(pentafluorophényl)borate.

En variante, l'agent ionisant peut également être un composé nonionique capable de transformer le métallocène en métallocène ionisé. A cet effet, l'agent ionisant est lui-même transformé en un anion qui est inerte vis-à-vis du métallocène cationique et qui est capable de stabiliser celui-ci. On peut citer comme exemples d'agent ionisant nonionique, le tri(pentafluorophényl)bore, le triphénylbore, le triméthylbore, le tri(triméthylsilyl)borate et les organoboroxines.

L'agent ionisant est de préférence sélectionné parmi le triphénylcarbénium tétrakis(pentafluorophényl)borate et le tri(pentafluorophényl)bore. Le triphénylcarbénium tétrakis(pentafluorophényl)borate convient particulièrement bien.

Dans le solide catalytique selon l'invention, le métallocène est habituellement choisi parmi les composés de formule (Cₚ)ₐ(Cₚ')_{b}MXₓZ_{z}, dans laquelle
- Cₚ et Cₚ' désignent chacun un radical hydrocarboné insaturé coordiné à l'atome central M, les groupes Cₚ et Cₚ' pouvant être liés par un pont covalent,
- M désigne le métal de transition, qui est choisi parmi les groupes IIIB, IVB, VB et VIB du tableau périodique,
- a, b, x et z désignent des nombres entiers tels que (a + b + x + z) = m , x > 0, z ≧ 0 et a et/ou b ≠ 0,
- m désigne la valence du métal de transition M,
- X désigne un halogène, et
- Z désigne un radical hydrocarboné pouvant éventuellement comprendre de l'oxygène ou un radical silyl de formule (-Rₜ-Si-R'R''R''') où
- R désigne un groupe alkyle, alkényle, aryle, alkoxy ou cycloalkyle éventuellement substitué comprenant jusqu'à 20 atomes de carbone,
- R', R" et R‴ sont identiques ou différents et désignent chacun un halogène ou un groupe alkyle, alkényle, aryle, alkoxy ou cycloalkyle éventuellement substitué comprenant jusqu'à 20 atomes de carbone,
- t désigne 0 ou 1.

De préférence, le métal de transition est sélectionné parmi le scandium, le titane, le zirconium, l'hafnium et le vanadium. Le zirconium convient particulièrement bien.

Les groupes Cₚ et Cₚ' représentent chacun avantageusement un groupe mono- ou polycyclique éventuellement substitué comprenant de 5 à 50 atomes de carbone liés par des doubles liaisons conjuguées. Comme exemple typique on peut citer le radical cyclopentadiényle, indényle ou fluorényle ou un dérivé substitué de ce radical. Les groupements substitués peuvent être choisis parmi les radicaux hydrocarbonés comprenant jusqu'à 10 atomes de carbone. Un des groupes Cp et Cp' ou les deux groupes peuvent également représenter un radical dérivé d'un élément choisi parmi le groupe VA du tableau périodique, par exemple l'azote ou le phosphore.

On peut citer comme exemples de métallocènes de formule (Cₚ)ₐ(Cₚ')_{b}MXₓZ_{z}, dans le cas où z est égal à 0, les métallocènes de scandium mono- et dihalogénés tels que le chlorodi(cyclopentadiényl)scandium et le dichloro(indényl)scandium, les métallocènes de titane mono-, di- et trihalogénés tels que le chlorotri(pentaméthylcyclopentadiényl)titane, le dibromodi(méthylcyclopentadiényl)titane et le trichloro(cyclopentadiényl)titane, les métallocènes de zirconium mono-, di- et trihalogénés tels que le dichlorodi(cyclopentadiényl)zirconium, le iodotri(cyclopentadiényl)zirconium, le dibromo(cyclopentadiényl-1-indényl)zirconium, le trichloro(fluorényl)zirconium, les métallocènes d'hafnium mono-, di- et trihalogénés et les métallocènes de vanadium mono-, di- et trihalogénés tels que le chlorotri(cyclopentadiényl)vanadium, le dichlorodi(éthylcyclopentadiényl)vanadium et le trichloro(éthylindényl)vanadium.

Dans le cas où z est différent de 0 et où Z est un radical hydrocarboné, le métallocène de formule (Cₚ)ₐ(Cₚ')_{b}MXₓZ_{z} peut par exemple être choisi parmi le chloro(cyclopentadiényl)éthylscandium, le dibromo(méthylcyclopentadiényl)butyltitane, le chloro(indényl)isopropyltitane et le dichloro(fluorényl)hexylzirconium.

Dans le cas où z est différent de 0 et où Z est un radical silyl de formule (-Rₜ-Si-R'R"R‴), le métallocène de formule (Cₚ)ₐ(Cₚ')_{b}MXₓZ_{z} peut par exemple être choisi parmi ceux comprenant comme radical silyl, l'allyldiméthylchlorosilyl, l'allylméthyldiéthoxysilyl, le 5-(dicycloheptényl)trichlorosilyl, le 2-bromo-3-triméthylsilyl-1-propényl, le 3-chloropropyldiméthylvinylsilyl, le 2-(3-cyclohexényl)éthyltriméthoxysilyl et le vinylchlorosilyl.

Les métallocènes ayant un pont covalent reliant les deux groupes Cₚ et Cₚ' peuvent contenir à titre de groupement de pontage un groupe alkylène pouvant éventuellement comprendre de l'oxygène, alkénylène, arylalkylène, alkylarylène, arylalkénylène, éventuellement halogéné ou un radical dérivé d'un élément choisi parmi les groupes IIIA, IVA, VA et VIA du tableau périodique, tel que le bore, l'aluminium, le silicium, le germanium, l'étain, l'azote, le phosphore et le soufre. L'éthylène, le diméthylsilylène, le diméthylméthylène conviennent particulièrement bien.

Les métallocènes de formule (Cₚ)ₐ(Cₚ')_{b}MXₓZ_{z} préférés sont ceux dans lesquels les groupes Cₚ et Cₚ' sont choisis parmi les radicaux cyclopentadiényle, indényle et fluorényle. De bons résultats sont obtenus avec ceux dont les groupes Cₚ et Cₚ' sont liés par un pont covalent du type alkylène. Les métallocènes dont le métal de transition est choisi parmi le titane, le zirconium et l'hafnium conviennent très bien. On obtient des résultats particulièrement satisfaisants avec les métallocènes dérivés du zirconium.

Dans le solide catalytique selon l'invention, le métal du groupe VIB du tableau périodique est de préférence le chrome. Le composé de chrome peut être choisi parmi les composés inorganiques ou organiques de chrome dans lesquels le chrome est à l'état hexavalent, trivalent ou bivalent. On peut citer comme exemples de composés de chrome les oxydes de chrome et les sels de chrome tels que l'acétate de chrome, le chlorure de chrome, le sulfate de chrome, les chromates, les bichromates ou l'acétylacétonate de chrome. Il peut par exemple s'agir de composés de chrome hexavalent obtenus par oxydation d'un composé de chrome dans lequel le chrome se trouve à un état réduit, l'oxydation pouvant éventuellement être réalisée en présence d'un support inorganique. Il peut aussi s'agir de composés de chrome tri- ou bivalent obtenus par réduction de composés de chrome hexavalent, éventuellement en présence d'un support inorganique.

Dans le solide catalytique selon l'invention, les quantités de métallocène et de composé d'un métal du groupe VIB présentes dépendent des caractéristiques souhaitées du (co)polymère d'éthylène. Lorsque l'on souhaite obtenir un (co)polymère d'éthylène ayant des propriétés proches de celles qui sont propres aux catalyseurs à base d'un métal du groupe VIB, il est souhaitable que le rapport molaire métal du groupe VIB/métal de transition soit élevé. Par contre, si l'on souhaite obtenir des propriétés proches de celles conférées par les métallocènes, il est préférable que ce rapport soit faible. Le métallocène et le composé d'un métal du groupe VIB sont généralement présents dans des quantités telles que le rapport molaire métal du groupe VIB/métal de transition est d'au moins 0,001, en particulier d'au moins 0,01, les rapports d'au moins 0,1 étant les plus avantageux. Le rapport molaire métal du groupe VIB/métal de transition est le plus souvent d'au plus 100, plus précisément d'au plus 50, les rapports d'au plus 10 étant recommandés, par exemple d'environ 1 à environ 3,5.

Le support inorganique du solide catalytique selon l'invention peut par exemple être choisi parmi les halogénures métalliques, tels que le chlorure de magnésium, parmi les oxydes métalliques, tels que les oxydes de silicium, d'aluminium, de titane, de zirconium, de thorium, leurs mélanges et les oxydes mixtes de ces métaux tels que le silicate d'aluminium et le phosphate d'aluminium. Le support peut éventuellement être traité avec un composé fluoré. La silice, l'alumine, le chlorure de magnésium, le phosphate d'aluminium et les mélanges de silice, d'alumine et de phosphate d'aluminium conviennent bien. Les supports contenant simultanément de la silice (X), de l'alumine (Y) et du phosphate d'aluminium (Z) sont avantageux, en particulier ceux dont le rapport molaire (X):(Y):(Z) est de (10 à 95):(1 à 80):(1 à 85), plus précisément de (20 à 80):(1 à 60):(5 à 60).

Le support présente généralement une granulométrie caractérisée par un diamètre moyen D d'au moins 10 µm, en particulier d'au moins 20 µm, les diamètres d'au moins 40 µm étant les plus courantes. Le diamètre est habituellement d'au plus 1000 µm, typiquement d'au plus 500 µm, les valeurs d'au plus 200 µm étant recommandées. Le plus souvent, la granulométrie est en outre caractérisée par un écart type σ d'au moins 10 µm, plus précisément d'au moins 20 µm. L'écart type est couramment d'au plus 50 µm, avantageusement d'au plus 40 µm.

Le support présente avantageusement une surface spécifique mesurée par la méthode volumétrique BET de la norme britannique BS 4359/1 (1984) d'au moins 100 m²/g, plus spécialement d'au moins 180 m²/g, les valeurs d'au moins 220 m²/g étant les plus avantageuses. La surface spécifique est couramment d'au plus 800 m²/g, le plus souvent d'au plus 700 m²/g, les valeurs d'au plus 650 m²/g étant favorables.

Dans la plupart des cas, le support est en outre caractérisé par un volume poreux d'au moins 1,5 cm³/g, en particulier d'au moins 2,0 cm³/g, les valeurs d'au moins 2,2 cm³/g étant les plus courantes. Le volume poreux est habituellement d'au plus 5,0 cm³/g, de préférence d'au plus 4,5 cm³/g, les valeurs d'au plus 4,0 cm³/g étant recommandées. Le volume poreux est la somme du volume poreux mesuré par la méthode de pénétration à l'azote (BET) selon la technique volumétrique décrite dans la norme britannique BS 4359/1 (1984), et du volume poreux mesuré par la méthode de pénétration au mercure au moyen du porosimètre de type PORO 2000 commercialisé par CARLO ERBA CO, selon la norme belge NBN B 05-202 (1976).

Le solide catalytique selon l'invention comprend avantageusement le support en une quantité d'au moins 0,01 % en poids par rapport au poids total du support inorganique et du composé de métal du groupe VIB, de préférence d'au moins 0,1 % en poids, les valeurs d'au moins 0,2 % en poids étant les plus courantes; la quantité du support n'excède habituellement pas 2 % en poids, en particulier pas 1,5 % en poids, les valeurs d'au plus 1 % en poids étant recommandées.

Il va de soi que le solide catalytique selon l'invention peut comprendre plus d'un métallocène, plus d'un agent ionisant, plus d'un support et/ou plus d'un composé d'un métal du groupe VIB.

Le solide catalytique selon l'invention présente l'avantage de permettre l'obtention de (co)polymères d'éthylène présentant un indice de fluidité élevé et une distribution des masses moléculaires large facilitant ainsi leur mise en oeuvre sans difficultés dans tous les procédés classiques de fabrication d'objets façonnés tels que les procédés d'extrusion, d'extrusion-soufflage, d'extrusion-thermoformage et d'injection. Le solide catalytique selon l'invention permet également l'obtention de (co)polymères d'éthylène de bonnes propriétés rhéologiques.

Le solide catalytique selon l'invention peut être obtenu par tout moyen connu adéquat. En particulier le solide catalytique selon l'invention est fabriqué au moyen d'un procédé selon lequel on prépare, dans une première étape, un solide comprenant un support inorganique et un composé d'un métal du groupe VIB et on y incorpore, dans une deuxième étape, un composé à base d'un métallocène de métal de transition et un composé à base d'un agent ionisant.

Dans le procédé selon l'invention le solide comprenant un support et un composé de métal du groupe VIB peut être obtenu de toute manière connue adéquate. Il peut par exemple être obtenu par imprégnation du support avec une solution aqueuse ou organique d'un composé de métal du groupe VIB, suivie d'un séchage en atmosphère oxydante. On peut utiliser à cet effet un composé de métal du groupe VIB choisi parmi les sels solubles tels que l'acétate, le chlorure, le sulfate (en particulier, lorsque le métal est le chrome, les chromates et les bichromates) en solution aqueuse, ou tel que l'acétylacétonate en solution organique. Après l'imprégnation du support avec le composé de métal du groupe VIB, le support imprégné est avantageusement activé en le chauffant à une température de 400 à 1000 °C pour transformer une partie au moins du métal en métal hexavalent. Ensuite, le métal hexavalent peut éventuellement être réduit au moins partiellement par un agent réducteur tel que par exemple le monoxyde de carbone ou l'éthylène. Le composé de métal du groupe VIB mis en oeuvre peut aussi être prépolymérisé.

Le solide comprenant un support et un composé d'un métal du groupe VIB peut avantageusement être obtenu au moyen d'un mélange mécanique d'un support avec un composé solide d'un métal du groupe VIB en l'absence d'un liquide, par exemple de l'acétylacétonate du métal. Ensuite, ce mélange est avantageusement préactivé à une température inférieure à la température de fusion du composé de métal du groupe VIB avant de l'activer conventionnellement comme décrit ci-dessus.

En variante, le composé d'un métal du groupe VIB peut également être incorporé au support pendant la fabrication de celui-ci de manière à obtenir une dispersion homogène du métal dans le support.

Dans le solide comprenant un support et un composé d'un métal du groupe VIB, le métal est généralement présent en une proportion d'au moins 0,05 % en poids sur base du poids total du solide, en particulier d'au moins 0,1 % en poids, les valeurs d'au moins 0,25 % en poids étant les plus avantageuses. La proportion de métal est le plus souvent d'au plus 10 % en poids sur base du poids total du solide, plus précisément d'au plus 5 % en poids, les valeurs d'au plus 2 % en poids étant les plus courantes.

Dans la deuxième étape du procédé selon l'invention l'incorporation du composé à base d'un métallocène et celle du composé à base d'un agent ionisant peuvent être effectuées simultanément ou séparément. Dans ce dernier cas, le composé à base d'un métallocène et le composé à base d'un agent ionisant peuvent être ajoutés dans un ordre quelconque.

Dans la deuxième étape du procédé selon l'invention l'incorporation peut être réalisée par tout moyen connu adéquat. Lorsque l'on ajoute simultanément le composé à base d'un métallocène et le composé à base d'un agent ionisant, on préfère l'effectuer par mélange avec le solide comprenant un support et un composé d'un métal du groupe VIB dans un milieu hétérogène. Par "milieu hétérogène" on entend désigner aux fins de la présente invention un milieu comprenant le solide contenant un support et un composé d'un métal du groupe VIB, le composé à base d'un agent ionisant et le composé à base d'un métallocène, dans lequel au moins 80 % (de préférence au moins 95 %) d'un au moins de ces deux derniers composés et au moins 80 % (de préférence au moins 95 %) du solide contenant un support et un composé d'un métal du groupe VIB se trouvent à l'état solide. Ce milieu hétérogène peut être essentiellement solide et obtenu en mélangeant, en l'absence d'un liquide, les deux composés précités à l'état solide avec le solide comprenant un support et un composé d'un métal du groupe VIB, généralement à l'état de poudres. En variante, le milieu hétérogène peut contenir une phase liquide et être constitué d'une suspension comprenant un liquide organique dans lequel au moins 80 % (de préférence au moins 95 %) d'un au moins des deux composés (le composé à base d'un agent ionisant et le composé à base d'un métallocène) et au moins 80 % (de préférence 95 %) du solide contenant un support et un composé d'un métal du groupe VIB sont insolubles. Comme liquide organique on peut utiliser un hydrocarbure aliphatique choisi parmi les alcanes linéaires (par exemple le n-butane, le n-hexane et le n-heptane), les alcanes ramifiés (par exemple l'isobutane, l'isopentane, l'isooctane et le 2,2-diméthylpropane), et les cycloalcanes (par exemple le cyclopentane et le cyclohexane). Les hydrocarbures aromatiques monocycliques tels que le benzène et ses dérivés, par exemple le toluène, et les hydrocarbures aromatiques polycycliques, chaque cycle pouvant être substitué, conviennent également, pour autant qu'on soit dans un milieu hétérogène tel que défini ci-avant. On peut aussi mettre en oeuvre un hydrocarbure aliphatique halogéné, tel que les alkanes chlorés comme par exemple CH₂Cl₂ ou CCl₄. On préfère les hydrocarbures aromatiques et les alcanes chlorés. Lorsque l'on ajoute séparément le composé à base d'un métallocène et le composé à base d'un agent ionisant, l'incorporation du premier composé est avantageusement réalisée dans un milieu hétérogène dans lequel au moins 80 % (de préférence 95 %) du solide contenant un support et un composé d'un métal du groupe VIB se trouve à l'état solide. L'incorporation du deuxième composé est alors préférentiellement réalisée dans un milieu hétérogène dans lequel au moins 80 % (de préférence 95 %) soit du premier soit du deuxième soit des deux composés et au moins 80 % (de préférence 95 %) du solide contenant un support et un composé d'un métal du groupe VIB sont à l'état solide. Les milieux hétérogènes peuvent être essentiellement solides ou peuvent contenir une phase liquide comme décrit ci-dessus.

L'incorporation du composé à base d'un métallocène et/ou du composé à base d'un agent ionisant peut être effectuée par exemple dans un mélangeur muni d'un agitateur, dans un réacteur à lit tournant, ou dans un réacteur à lit agité ou fluidisé ou encore dans un réacteur rotatif. En général, dans le cas où l'ajout est effectué en l'absence d'un liquide organique, il peut s'avérer souhaitable de réaliser le mélange du composé à base du métallocène et du composé à base de l'agent ionisant avec le solide comprenant un support et un composé d'un métal du groupe VIB en les broyant ensemble. On opère de préférence dans un réacteur rotatif ou dans un mélangeur muni d'un agitateur.

Dans une forme de réalisation particulièrement avantageuse du procédé selon l'invention, la deuxième étape est effectuée en mélangeant d'abord le solide comprenant un support et un composé d'un métal du groupe VIB avec un composé à base d'un métallocène en l'absence d'un liquide et ensuite en imprégnant le mélange ainsi obtenu avec une solution d'un composé à base d'un agent ionisant. Le mélange en l'absence d'un liquide est de préférence réalisé dans un lit fluide.

Dans le procédé de préparation selon l'invention, le métallocène et l'agent ionisant sont conformes à ceux décrits ci-avant. Par "composé à base d'un métallocène", on entend désigner le métallocène pur ou un composé mixte comprenant le métallocène et au moins une autre substance solide différente du métallocène et de l'agent ionisant et inerte vis-à-vis de ceux-ci. Par "composé à base d'un agent ionisant", on entend désigner l'agent ionisant pur ou un composé mixte comprenant l'agent ionisant et au moins une autre substance solide différente de l'agent ionisant et du métallocène et inerte vis-à-vis de ceux-ci. Ces substances solides peuvent être du type polymérique (tel que les polymères d'oléfines) ou minéral (tel que les oxydes métalliques et les halogénures de métaux). Ces composés mixtes respectifs peuvent par exemple être obtenus par mélange mécanique à l'état solide du métallocène ou de l'agent ionisant avec la substance solide. En variante, ils peuvent être obtenus par imprégnation de la substance solide avec une solution du métallocène respectivement de l'agent ionisant. On peut aussi utiliser le métallocène et l'agent ionisant à l'état pur.

Les quantités du composé à base du métallocène et du composé à base de l'agent ionisant mises en oeuvre dans le procédé selon l'invention de préparation sont habituellement telles que le rapport molaire métallocène/agent ionisant est d'au moins 0,5, en particulier d'au moins 1. Le rapport molaire métallocène/agent ionisant ne dépasse en général pas 2. Un rapport molaire de 1 est préféré.

La température à laquelle l'incorporation est effectuée dans la deuxième étape du procédé selon l'invention peut être toute température inférieure à la température de décomposition du support, du composé d'un métal du groupe VIB, du composé à base d'un métallocène et du composé à base d'un agent ionisant. La température dépend dès lors de la nature de ces constituants; elle est généralement au moins égale à 0 °C, de préférence à 20 °C; les valeurs au maximum égales à 250 °C étant les plus courantes, celles inférieures à 200 °C, par exemple 150 °C, étant les plus avantageuses. Dans le cas où le milieu hétérogène est une suspension comprenant un liquide organique, la température doit être telle qu'au moins 80 % (de préférence 95 %) du solide contenant un support et un composé d'un métal du groupe VIB et, le cas échéant, au moins 80 % (de préférence au moins 90 %) d'au moins un des deux composés (le composé à base d'un agent ionisant et le composé à base d'un métallocène) soient insolubles dans le liquide organique. L'incorporation peut être réalisée à une température constante ou à une température variable de manière continue ou discontinue.

Dans la deuxième étape du procédé selon l'invention, la durée pendant laquelle l'incorporation est effectuée doit être suffisante pour homogénéiser le mélange au maximum. La durée va dépendre du mélangeur utilisé. Elle est généralement au moins égale à 1 min, de préférence à 5 h; pour des considérations d'ordre économique, il est souhaitable qu'elle n'excède pas 100 h, en particulier pas 50 h. Une durée d'environ 24 h convient particulièrement bien.

Dans une forme de réalisation particulière du procédé selon l'invention, le composé à base d'un métallocène et/ou le composé à base d'un agent ionisant comprennent en outre à titre de substance solide différente du métallocène et/ou de l'agent ionisant, un support. Le support est conforme au support décrit plus haut. La quantité de support présente dans le composé à base d'un métallocène ou à base d'un agent ionisant est telle que le rapport pondéral du support au composé à base d'un métallocène (ou à base d'un agent ionisant) soit au moins égal à 0,05, de préférence à 2; il est souhaitable qu'il n'excède pas 1000, en particulier pas 100, les valeurs voisines de 10 étant recommandées.

Le solide catalytique selon l'invention trouve une application pour la (co)polymérisation d'éthylène, en association avec un cocatalyseur.

L'invention concerne dès lors également un système catalytique pour la (co)polymérisation d'éthylène, obtenu par mise en contact d'un solide catalytique conforme à l'invention, tel que défini plus haut avec un cocatalyseur sélectionné parmi les composés organométalliques d'un métal choisi parmi les groupes IA, IIA, IIB, IIIA et IVA du tableau périodique.

Dans le système catalytique selon l'invention le cocatalyseur peut par exemple être choisi parmi les composés organométalliques du lithium, du magnésium, du zinc, de l'aluminium ou de l'étain. Les meilleurs résultats sont obtenus avec les composés organoaluminiques comprenant au moins une liaison aluminium-carbone et pouvant éventuellement comprendre de l'oxygène et/ou un halogène. On peut citer comme exemples les composés trialkylaluminium, les composés alkylaluminiques halogénés et les composés alkylaluminiques comprenant au moins un groupe alkoxy. Les composés organoaluminiques répondent avantageusement à la formule générale AlTT'T'' dans laquelle les groupes T, T' et T'' désignent chacun un groupe alkyle, alkényle, aryle ou alkoxy, éventuellement substitué, contenant jusqu'à 20 atomes de carbone. Il peut s'agir par exemple de triméthyl-, de triéthyl-, de tripropyl-, de triisopropyl-, de tributyl-, de triisobutyl-, de trihexyl-, de trioctyl- et de tridodécylaluminium. Le triméthylaluminium convient particulièrement bien. On peut également utiliser le triéthylbore, seul ou en mélange avec un composé organoaluminique tel que décrit ci-dessus.

Dans le système catalytique selon l'invention, la quantité de cocatalyseur mise en oeuvre peut varier dans une large mesure. Elle est en général telle que le rapport molaire du cocatalyseur au métallocène soit au moins égale à 5. En pratique toutefois, on n'a pas intérêt à ce que ce rapport excède 5000, les valeurs inférieures à 2000 étant recommandées. Des valeurs voisines de 10 à 500 conviennent généralement bien lorsque le système catalytique est destiné à la polymérisation d'oléfines.

Le système catalytique selon l'invention peut être utilisé pour l'homopolymérisation et la copolymérisation d'éthylène avec un ou plusieurs comonomères. Les comonomères peuvent être de matières diverses. Ils peuvent être des monooléfines pouvant comprendre jusqu'à 8 atomes de carbone, par exemple le 1-butène, le 1-pentène, le 3-méthyl-1-butène, le 1-hexène, les 3- et 4-méthyl-1-pentènes et le 1-octène. Une ou plusieurs dioléfines comprenant de 4 à 18 atomes de carbone peuvent également être copolymérisées avec l'éthylène et le propylène. De préférence, les dioléfines sont choisies parmi les dioléfines aliphatiques non conjuguées telles que le 4-vinylcyclohexène et le 1,5-hexadiène, les dioléfines alicycliques ayant un pont endocyclique telles que le dicyclopentadiène, le méthylène- et l'éthylidène-norbornène, et les dioléfines aliphatiques conjuguées telles que le 1,3-butadiène, l'isoprène et le 1,3-pentadiène.

Le système catalytique selon l'invention apparait particulièrement performant pour la fabrication d'homopolymères de l'éthylène, et de copolymères de l'éthylène contenant au moins 90 %, de préférence au moins 95 %, en poids d'éthylène. Les comonomères préférés de l'éthylène sont le propylène, le 1-butène, le 1-hexène, le 1-octène et le 1,5-hexadiène et leurs mélanges. Les comonomères tout particulièrement préférées sont le 1-butène et le 1-hexène.

La présente invention concerne aussi un procédé de (co)polymérisation d'éthylène dans lequel on utilise un système catalytique conforme à l'invention, tel que défini plus haut.

Selon une forme d'exécution particulièrement avantageuse du procédé de polymérisation suivant l'invention, on mélange d'abord l'éthylène avec le cocatalyseur et on ajoute ensuite au mélange ainsi obtenu le solide catalytique. Dans cette forme d'exécution avantageuse du procédé de polymérisation selon l'invention, le cocatalyseur est en général mis en oeuvre sous forme d'une solution dans un diluant hydrocarboné. Ce diluant hydrocarboné peut être choisi parmi les hydrocarbures aliphatiques tels que les alcanes linéaires (par exemple le n-butane, le n-hexane et le n-heptane), les alcanes ramifiés (par exemple l'isobutane, l'isopentane, l'isooctane et le 2,2-diméthylpropane) et les cycloalcanes (par exemple le cyclopentane et le cyclohexane). On opère de préférence dans de l'isobutane ou de l'hexane.

Dans cette forme d'exécution avantageuse du procédé de polymérisation selon l'invention, dès le moment où on met le solide catalytique en contact avec le diluant hydrocarboné, le cocatalyseur et l'éthylène réagissent de manière à transformer le métallocène en une substance catalytique active à l'état ionisé.

Dans une variante de cette forme d'exécution particulière du procédé de polymérisation selon l'invention, visant à copolymériser l'éthylène avec au moins un comonomère, on introduit l'éthylène et le(s) comonomère(s) simultanément ou en différé dans le réacteur de polymérisation avant l'ajout du précurseur solide du système catalytique.

Dans le procédé de polymérisation suivant l'invention, la polymérisation peut être effectuée indifféremment en solution, en suspension ou en phase gazeuse, et peut être réalisée en continu ou en discontinu, par exemple en effectuant une polymérisation en suspension dans un premier réacteur suivie d'une polymérisation en phase gazeuse dans un second réacteur ou en opérant en phase gazeuse dans deux réacteurs consécutifs. En variante, on peut également réaliser la polymérisation dans plusieurs réacteurs disposés en série, la température et/ou la pression et/ou la concentration de comonomère dans le premier réacteur étant différentes de celles régnant dans les autres réacteurs. Dans la polymérisation on peut éventuellement mettre en oeuvre un régulateur du poids moléculaire tel que l'hydrogène ou le diéthylzinc.

Dans le cas d'une polymérisation en suspension, celle-ci est effectuée dans un diluant hydrocarboné à une température telle qu'au moins 80 % (de préférence au moins 95 %) du (co)polymère formé y soit insoluble. Le diluant hydrocarboné peut être choisi parmi les hydrocarbures aliphatiques, cycloaliphatiques et aromatiques liquides. Les diluants préférés sont les alcanes linéaires tels que le n-butane, le n-hexane et le n-heptane, ou les alcanes ramifiés tels que l'isobutane, l'isopentane, l'isooctane et le 2,2-diméthylpropane, ou les cycloalcanes tels que le cyclopentane et le cyclohexane ou leurs mélanges. La température est généralement au moins égale à 20 °C, de préférence au moins 50 °C; elle est habituellement au maximum égale à 200 °C, de préférence au maximum 100 °C. La pression partielle d'oléfine est le plus souvent au moins égale à la pression atmosphérique, de préférence ≥ 0,4 MPa, par exemple ≥ 0,6 MPa; cette pression est en général au maximum égale à 5 MPa, de préférence ≤ 2 MPa, par exemple ≤ 1,5 MPa.

Les exemples dont la description suit servent à illustrer l'invention. Dans ces exemples, on a fabriqué un solide catalytique conforme à l'invention, au moyen du procédé selon l'invention, et on l'a ensuite utilisé pour polymériser de l'éthylène.

La signification des symboles utilisés dans ces exemples, les unités exprimant les grandeurs mentionnées et les méthodes de mesure de ces grandeurs sont explicitées ci-dessous.

| | |
|---|---|
| MI₂ = | indice de fluidité du polymère fondu à 190 °C, mesuré sous une charge de 2,16 kg et exprimé en g/10 min. suivant la norme ASTM D 1238 (1990). |
| MI₅ = | indice de fluidité du polymère fondu à 190 °C, mesuré sous une charge de 5 kg et exprimé en g/10 min. suivant la norme ASTM D 1238 (1990). |
| HLMI = | indice de fluidité du polymère fondu à 190 °C, mesuré sous une charge de 21,6 kg et exprimé en g/10 min. suivant la norme ASTM D 1238 (1990). |
| MVS = | masse volumique standard du polymère exprimée en kg/m³ et mesurée selon la norme ASTM D 1928. |
| S = | fraction en oligomères du polymère exprimée en gramme d'oligomères par kilo de polymère et mesurée par extraction pendant 2 heures à l'hexane à sa température d'ébullition. |
| µ₂ = | viscosité (en dPa*s) mesurée à un gradient de vitesse de 100 s⁻¹. La filière utilisée a une hauteur de 30 mm et une section interne de 2 mm. |
| µ₀/µ₂ = | rapport entre les viscosités mesurées à un gradient de vitesse de 1 s⁻¹ et 100 s⁻¹. La filière utilisée a une hauteur de 30 mm et une section interne de 2 mm. |
| Mₙ = | masse moléculaire moyenne en nombre mesurée par chromatographie d'exclusion stérique réalisée dans le 1,2,4-trichlorobenzène à 135 °C sur un chromatographe de la société WATERS type 150 C. Cette masse est exprimée en dalton. |
| M_{w} = | masse moléculaire moyenne en poids mesurée par chromatographie d'exclusion stérique réalisée dans le 1,2,4-trichlorobenzène à 135 °C sur un chromatographe de la société WATERS type 150 C. Cette masse est exprimée en dalton. |
| M_{z} = | masse moléculaire moyenne du polymère définie par la relation : M_{z} = (Σ wᵢ Mᵢ²)/(Σ wᵢ Mᵢ) où wᵢ désigne le poids du polymère de masse moléculaire Mᵢ. La grandeur M_{z} est mesurée par chromatographie d'exclusion stérique réalisée dans le 1,2,4-trichlorobenzène à 135 °C sur un chromatographe de la société WATERS type 150 C. Cette masse est exprimée en dalton. |

### Exemple 1 (conforme à l'invention)

a) Préparation d'un solide comprenant un support et un composé de chrome:
15 g d'un support de composition AlPO₄/SiO₂/Al₂O₃ = 48/51/2 (rapport molaire) et contenant 0,7 % en poids de Cr ont été calcinés à 815 °C sous balayage d'air sec. Après 16 heures, le catalyseur a été récupéré.
b) Incorporation d'un métallocène (dicyclopentadiényl-dichloro-zirconium) :
On a mélangé 9,451 g du catalyseur activé à l'étape (a) ci-dessus avec 0,207 g de dicyclopentadiényl-dichloro-zirconium à 70 °C pendant 16 h sous azote.
c) Incorporation d'un agent ionisant (triphénylcarbénium tétrakispentafluorophénylborate) :
4,158 g du mélange préparé lors de l'étape (b) ont été ajoutés à 0,281 g de triphénylcarbénium tétrakispentafluorophénylborate. L'ensemble a été agité à température ambiante pendant 15 heures. Le solide catalytique a alors été récupéré.
d) Polymérisation d'éthylène :
Dans un autoclave de 3 litres, préalablement séché et muni d'un agitateur, on a introduit du triméthylaluminium (TMA) en solution dans l'hexane et 1 litre d'isobutane. L'autoclave a été chauffé à une température de consigne qui a été maintenue pendant toute la durée de l'essai. Lorsque la température de consigne a été atteinte, de l'éthylène a été introduit dans l'autoclave à une pression partielle de 10 bars. De l'hydrogène a également été introduit à une pression partielle renseignée dans le tableau ci-dessous. Une quantité donnée du solide catalytique préparé lors de l'étape (c) décrite ci-dessus a alors été injectée dans l'autoclave avec 100 ml d'isobutane à 40 bars. Au cours de la réaction, la pression totale a été maintenue par ajout d'éthylène dans l'autoclave. Après 1 heure, la polymérisation a été arrêtée par dégazage et refroidissement de l'autoclave.
Dans le tableau 1 ci-dessous TMA renseigne le nombre de ml d'une solution d'hexane contenant 50 g/l de triméthylaluminium, la température (Temp.) est renseignée en °C, la pression partielle en hydrogène (H2) en bar, la quantité de catalyseur introduite (cata) en mg et la quantité de polyéthylène recueilli (PE) en g.

**Tableau 1**

| exemple | TMA | Temp. | H2 | cata | PE |
|---|---|---|---|---|---|
| 1a | 0 | 60 | 0.2 | 182 | 65 |
| 1b | 0.3 | 60 | 0.2 | 236 | 122 |
| 1c | 0.75 | 60 | 0.2 | 160 | 41 |
| 1d | 1.5 | 60 | 0.2 | 234 | 47 |
| 1e | 1.5 | 60 | 0 | 323 | 78 |
| 1f | 1.5 | 60 | 0.6 | 299 | 67 |
| 1g | 1.5 | 50 | 0.2 | 198 | 28 |
| 1h | 1.5 | 70 | 0.2 | 237 | 72 |
| 1i | 1.5 | 80 | 0.2 | 244 | 56 |
| 1j | 1.5 | 90 | 0.2 | 350 | 15 |
| NM = non mesuré | | | | | |

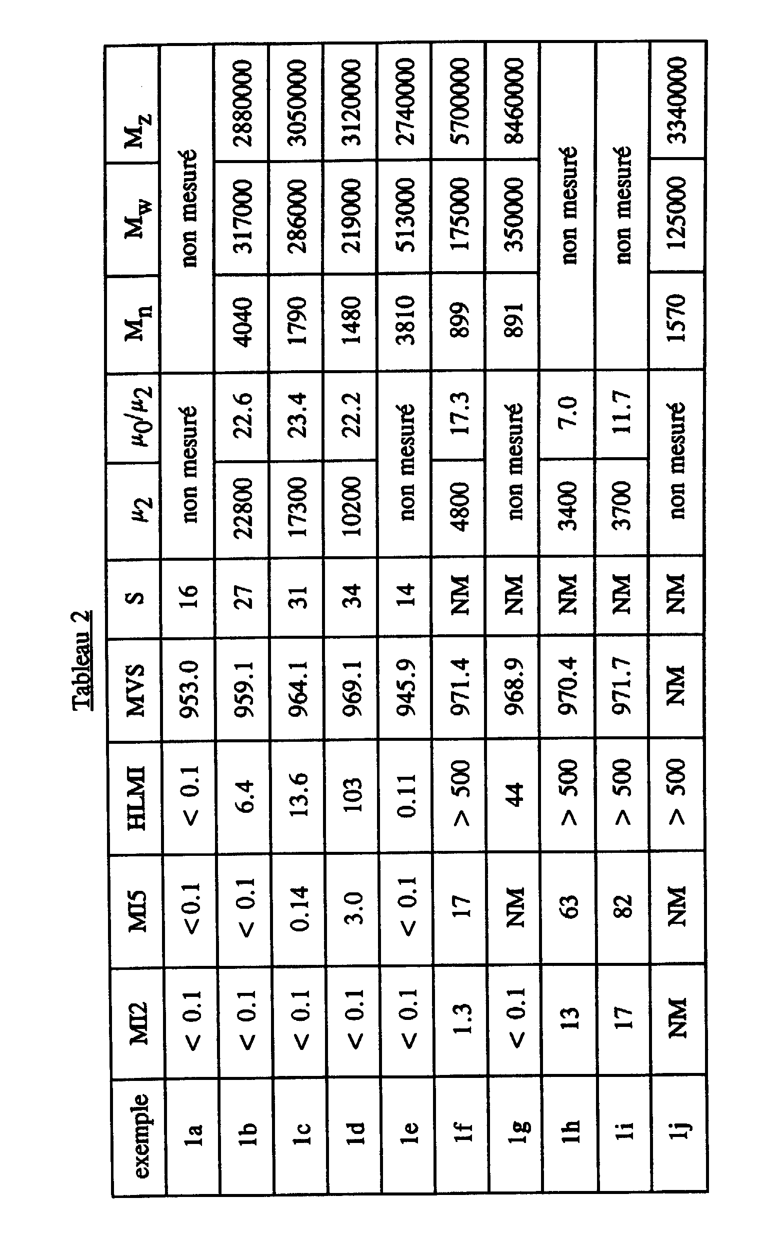

### Exemple 2 (conforme à l'invention)

a) Préparation du solide catalytique :
   Les opérations de l'exemple 1(a) à (c) ont été répétées de manière à obtenir un rapport molaire Cr/Zr de 3,3.
b) Polymérisation d'éthylène :
   Dans un autoclave de 3 litres, préalablement séché et muni d'un agitateur, on a introduit 1,5 ml d'une solution d'hexane contenant 50 g/l de triméthylaluminium et 1 litre d'isobutane. L'autoclave a été chauffé à 60 °C, température qui a été maintenue pendant toute la durée de l'essai. Lorsque la température de consigne est atteinte, de l'éthylène et de l'hydrogène ont été introduits dans l'autoclave à une pression partielle respectivement de 10 bars et 0,2 bar. 159 mg du solide catalytique préparé lors de l'étape (a) décrite ci-dessus ont alors été introduits dans l'autoclave avec 100 ml d'isobutane à 40 bars. Au cours de la réaction, la pression totale a été maintenue par ajout d'éthylène dans l'autoclave. Après 1 heure, la polymérisation a été arrêtée par dégazage et refroidissement de l'autoclave. 41 g de polyéthylène ont été recueillis.
   Les caractéristiques du polymère étaient :
   MI2 < 0,1 g/10 min.
   MI5 < 0,1 g/10 min.
   HLMI < 0,1 g/10 min.
   MVS = 960,9 kg/m³
   S = 32 g/kg
   Mₙ = 1420
   M_{w} = 349000
   M_{z} = 2930000

### Exemple 3 (conforme à l'invention)

a) Préparation du solide catalytique :
   Les opérations de l'exemple 1 (a) à (c) ont été répétées de manière à obtenir un rapport molaire Cr/Zr de 0,95.
b) Polymérisation d'éthylène :
   Dans un autoclave de 3 litres, préalablement séché et muni d'un agitateur, on a introduit 1,5 ml d'une solution d'hexane contenant 50 g/l de triméthylaluminium et 1 litre d'isobutane. L'autoclave a été chauffé à 60 °C, température qui a été maintenue pendant toute la durée de l'essai. De l'éthylène et de l'hydrogène ont été introduits dans l'autoclave à une pression partielle respectivement de 10 bars et 0,2 bar. 160 mg du solide catalytique préparé lors de l'étape (c) décrite ci-dessus ont alors été introduits dans l'autoclave avec 100 ml d'isobutane à 40 bars. Au cours de la réaction, la pression totale a été maintenue par ajout d'éthylène dans l'autoclave. Après 1 heure, la polymérisation a été arrêtée par dégazage et refroidissement de l'autoclave. 149 g de polyéthylène ont été recueillis.
   Les caractéristiques du polymère étaient :
   MI2 = 40 g/10 min.
   MI5 = 126 g/10 min.
   HLMI > 500 g/10 min.
   MVS = 971,2 kg/m³
   S = 20 g/kg
   Mₙ = 2230
   M_{w} = 115000
   M_{z} = 2380000

### Exemple 4 (conforme à l'invention)

a) Préparation d'un solide comprenant un support et un composé de chrome:
   15 g d'un support de composition AlPO₄/SiO₂/Al₂O₃ = 47,5/50,4/2,1 (rapport molaire) ont été mélangés avec de l'acétylacétonate de chrome en une quantité telle que le mélange contienne 1 % en poids de Cr. Puis, on a traité le mélange ainsi obtenu dans un lit fluide à 150 °C pendant 2 heures sous balayage d'air sec. Ensuite, on l'a calciné à 815 °C toujours sous balayage d'air sec. Après 16 heures à 815 °C, le catalyseur a été récupéré.
b) Incorporation d'un métallocène (dicyclopentadiényl-dichloro-zirconium) :
   On a mélangé 13,2 g du solide obtenu à l'étape (a) ci-dessus avec 0,371 g de dicyclopentadiényl-dichloro-zirconium à 70 °C pendant 16h sous azote.
c) Incorporation d'un agent ionisant (triphénylcarbénium tétrakispentafluorophénylborate) :
   4,4 g du mélange préparé lors de l'étape (b) ont été ajoutés à 0,390 g de triphénylcarbénium tétrakispentafluorophénylborate dans 25 ml de CH₂Cl₂. Le CH₂Cl₂ a ensuite été éliminé par distillation sous pression réduite à température ambiante. Le solide catalytique a ensuite été séché à 50 °C.
d) Polymérisation d'éthylène :
   Dans un autoclave de 3 litres, préalablement séché et muni d'un agitateur, on a introduit du triméthylaluminium en solution dans l'hexane et 1 litre d'isobutane. L'autoclave a été chauffé à une température de consigne qui a été maintenue pendant toute la durée de l'essai. Lorsque la température de consigne a été atteinte, de l'éthylène a été introduit dans l'autoclave à une pression partielle de 10 bars. De l'hydrogène a également été introduit à une pression partielle renseignée dans le tableau ci-dessous. Une quantité donnée du solide catalytique préparé lors de l'étape (c) décrite ci-dessus a alors été injectée dans l'autoclave avec 100 ml d'isobutane à 40 bars.
   Au cours de la réaction, la pression totale a été maintenue par ajout d'éthylène dans l'autoclave.
   La polymérisation a été arrêtée par dégazage et refroidissement de l'autoclave. 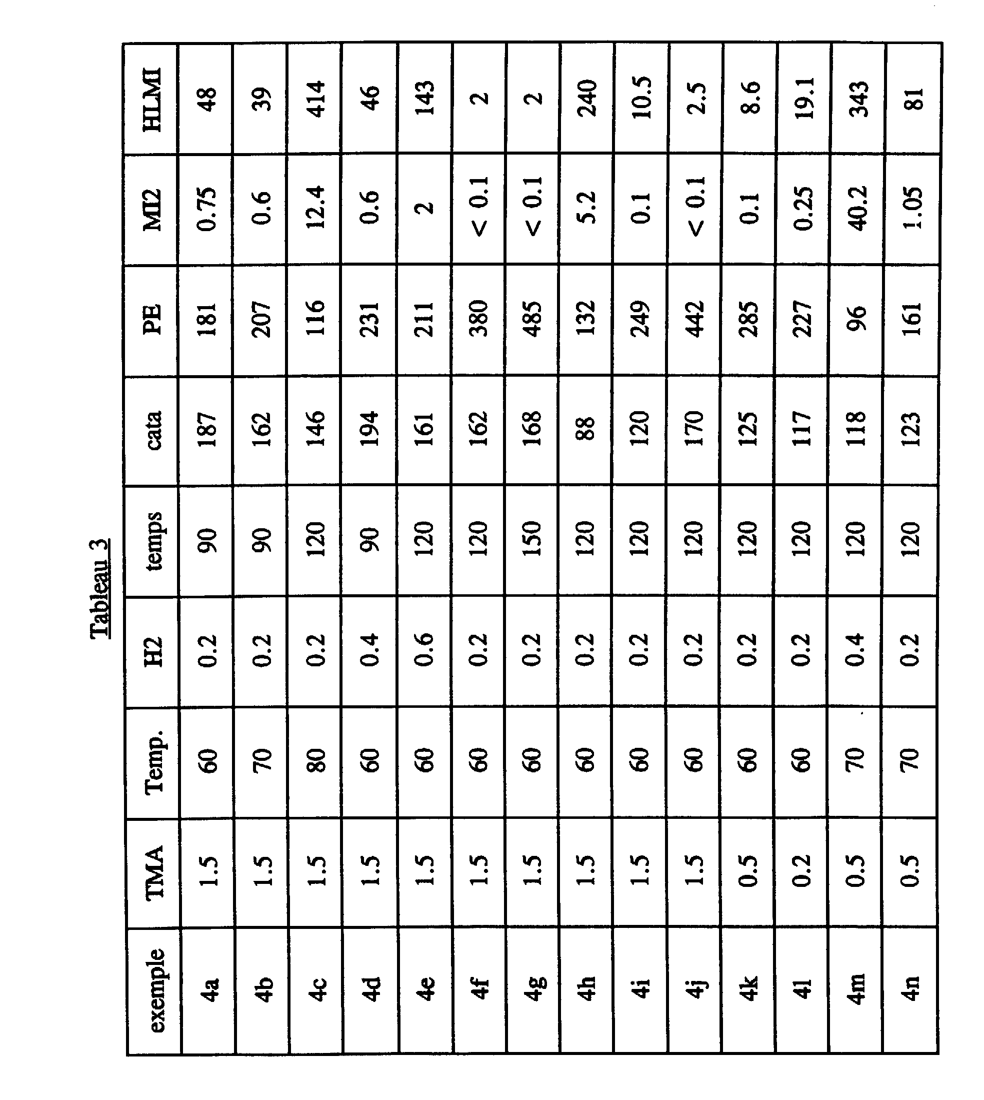
   Dans le tableau 3 ci-dessus TMA renseigne le nombre de ml d'une solution d'hexane contenant 50 g/l de triméthylaluminium, la température (Temp.) est renseignée en °C, la pression partielle en hydrogène (H2) en bar, la durée de la polymérisation (temps) en minutes, la quantité de catalyseur introduite (cata) en mg et la quantité de polyéthylène recueilli (PE) en g.

### Exemple 5 (conforme à l'invention)

a) Préparation du solide comprenant un support et un composé de chrome :
   20 g d'un support de composition AlPO₄/SiO₂/Al₂O₃ = 47,5/50,4/2,1 (rapport molaire) et contenant 0,7 % en poids de Cr ont été calcinés à 815 °C sous balayage d'air sec. Après 16 heures, le solide a été récupéré.
b) Incorporation d'un métallocène (dicyclopentadiényl-dichloro-zirconium) :
   On a mélangé 13,4 g du solide obtenu à l'étape (a) ci-dessus avec 0,264 g de dicyclopentadiényl-dichloro-zirconium à 70 °C pendant 16h sous azote. Le mélange ainsi obtenu est appelé mélange 5b par la suite.
c) Incorporation d'un agent ionisant (triphénylcarbénium tétrakispentafluorophénylborate) :
   2,7 g du mélange 5b ont été ajoutés à 0,169 g de triphénylcarbénium tétrakispentafluorophénylborate dans 15 ml de toluène. Le toluène a ensuite été éliminé par distillation sous pression réduite à température ambiante. Le solide catalytique a alors été récupéré.
d) Polymérisation d'éthylène :
   Dans un autoclave de 3 litres, préalablement séché et muni d'un agitateur, on a introduit 1,5 ml d'une solution d'hexane contenant 50 g/l de triméthylaluminium et 1 litre d'isobutane. L'autoclave a été chauffé à 60 °C, température qui a été maintenue pendant toute la durée de l'essai. Lorsque la température de consigne a été atteinte, de l'éthylène et de l'hydrogène ont été introduits dans l'autoclave à des pressions partielles de, respectivement 10 et 0,2 bar. 198 mg du solide catalytique préparé lors de l'étape (c) décrite ci-dessus ont alors été introduits dans l'autoclave avec 100 ml d'isobutane à 40 bars. Au cours de la réaction, la pression totale a été maintenue par ajout d'éthylène dans l'autoclave. Après 2 heures, la polymérisation a été arrêtée par dégazage et refroidissement de l'autoclave.
   124 g de polymère ont été réceuillis. Le polyéthylène est caractérisé par MI2 = 2,6 g/10 min. et HLMI = 240 g/10 min.

### Exemple 6 (conforme à l'invention)

a) Préréduction du solide comprenant un support, un composé de chrome et un métallocène:
   0,6 g du mélange 5b ont été placés dans un ballon conditionné sous azote puis préréduits sous flux d'éthylène pendant 15 minutes à température ambiante.
b) Incorporation d'un agent ionisant (triphénylcarbénium tétrakispentafluorophénylborate) :
   Le composé obtenu lors de l'étape (a) décrite ci-dessus a été mélangé avec 0,0378 g de tétrakispentafluorophénylborate de triphénylcarbénium dans 5 ml de toluène. Le toluène a ensuite été éliminé par distillation sous pression réduite à température ambiante. Le solide catalytique a alors été récupéré.
c) Polymérisation d'éthylène :
   Dans un autoclave de 3 litres, préalablement séché et muni d'un agitateur, on a introduit 0,5 ml d'une solution d'hexane contenant 50 g/l de triméthylaluminium et 1 litre d'isobutane. L'autoclave a été chauffé à 60 °C, température qui a été maintenue pendant toute la durée de l'essai. Lorsque la température de polymérisation a été atteinte, de l'éthylène et de l'hydrogène ont été introduits dans l'autoclave à des pressions partielles de, respectivement, 10 et 0,2 bar. 170 mg du solide catalytique préparé lors de l'étape (b) décrite ci-dessus ont alors été introduits dans l'autoclave avec 100 ml d'isobutane à 40 bars. Au cours de la réaction, la pression totale a été maintenue par ajout d'éthylène dans l'autoclave. Après 90 minutes, la polymérisation a été arrêtée par dégazage et refroidissement de l'autoclave. 106 g de polymère ont été recueillis. Le polyéthylène est caractérisé par MI2 = 0,1 g/10 min. et HLMI = 46,8 g/10 min.

### Exemple 7 (conforme à l'invention)

a) Préparation d'un solide comprenant un support et un composé de chrome:
   15 g d'un support de composition AlPO₄/SiO₂/Al₂O₃ = 47,5/50,4/2,1 (rapport molaire) et contenant 0,7 % en poids de Cr ont été calcinés à 815 °C sous balayage d'air sec. Après 16 heures, le solide ainsi obtenu a été récupéré.
b) Incorporation d'un métallocène (dicyclopentadiényl-dichloro-zirconium) :
   On a mélangé 13,77 g du solide obtenu à l'étape (a) ci-dessus avec 0,2977 g de dicyclopentadiényl-dichloro-zirconium à 70 °C pendant 16h30 sous azote. La mélange ainsi obtenu est appelé mélange 7b dans la suite.
c) Incorporation d'un agent ionisant (triphénylcarbénium tétrakispentafluorophénylborate) :
   3,5 g du mélange 7b ont été ajoutés à 0,2288 g de triphénylcarbénium tétrakispentafluorophénylborate. L'ensemble a été agité à température ambiante pendant 15 heures. Le solide catalytique a alors été récupéré.
d) Polymérisation d'éthylène :
   Dans un autoclave de 3 litres, préalablement séché et muni d'un agitateur, on a introduit 1,5 ml d'une solution d'hexane contenant 50 g/l de triméthylaluminium et 1 litre d'isobutane. L'autoclave a été chauffé à 60 °C, température qui a été maintenue pendant toute la durée de l'essai. Lorsque la température de consigne a été atteinte, de l'éthylène et de l'hydrogène ont été introduits dans l'autoclave à des pressions partielles de, respectivement, 10 bars et 0,2 bar. 251,9 mg du solide catalytique préparé lors de l'étape (c) décrite ci-dessus ont alors été introduits dans l'autoclave avec 100 ml d'isobutane à 40 bars. Au cours de la réaction, la pression totale a été maintenue par ajout d'éthylène dans l'autoclave. Après 1 heure, la polymérisation a été arrêtée par dégazage et refroidissement de l'autoclave. 22 g de polyéthylène ont été recueillis. Les caractéristiques de la résine sont :
   MI2 = 0,21 g/10 min.
   MI5 = 2,6 g/10 min.
   HLMI = 98 g/10 min.
   MVS = 973,3 kg/m³
   S = 55 g/kg
   µ₂ = 6600 dPa*s
   µ₀/µ₂ = 22,4
   Mₙ = 1100
   M_{w} = 249000
   M_{z} = 4760000

### Exemple 8 (donné à titre de comparaison)

Dans cet exemple un catalyseur tel que décrit dans la demande de brevet EP-A-339571 a été préparé. Ensuite, on l'a utilisé pour la polymérisation d'éthylène.
a) Préparation du catalyseur :
   Dans un ballon contenant 3,3 g du mélange 7b, on a ajouté 10 ml de toluène sec et 8,8 ml d'une solution de toluène contenant 315,9 g de méthyle aluminoxane par litre. Le mélange a été agité pendant 15 minutes au rotavapeur puis le toluène a été retiré par évaporation sous vide à 40 °C.
b) Polymérisation d'éthylène :
   Dans un autoclave de 3 litres, préalablement séché et muni d'un agitateur, on a introduit 1 litre d'isobutane. L'autoclave a été chauffé à 60 °C, température qui sera maintenue pendant toute la durée de l'essai. Lorsque la température de consigne a été atteinte, de l'éthylène et de l'hydrogène ont été introduits dans l'autoclave à des pressions partielles de, respectivement, 10 bars et 0,2 bar. 339,8 mg du catalyseur préparé lors de l'étape (a) décrite ci-dessus ont alors été introduits dans l'autoclave avec 100 ml d'isobutane à 40 bars. Au cours de la réaction, la pression totale a été maintenue par ajout d'éthylène dans l'autoclave. Après 1 heure, la polymérisation a été arrêtée par dégazage et refroidissement de l'autoclave. 15 g de polyéthylène ont été recueillis. Les caractéristiques de la résine sont :
   MI2 < 0,1 g/10 min.
   MI5 < 0,1 g/10 min.
   HLMI < 0,1 g/10 min.
   MVS = 969,0 kg/m³
   S = 18 g/kg
   Mₙ = 6630
   M_{w} = 680000
   M_{z} = 3850000
   Une comparaison des résultats de l'exemple 8 avec ceux de l'exemple 7 fait apparaître qu'un catalyseur tel que décrit dans la demande de brevet EP-A-339571 conduit, dans les mêmes conditions de polymérisation, à un indice de fluidité plus faible (HLMI < 0,1 g/10 min) que le système catalytique selon l'invention (HLMI = 98 g/10 min).

### Exemple 9 (conforme à l'invention)

a) Préparation d'un solide comprenant un support et un composé de chrome :
   15 g d'un catalyseur HA30W commercialisé par Grace-Davison et contenant 1 % en poids de Cr ont été calcinés à 815 °C sous balayage d'air sec.
   Après 16 heures, 12,7 g de solide a été récupéré.
b) Incorporation d'un métallocène (dicyclopentadiényl-dichloro-zirconium) :
   On a mélangé 12,7 g du solide obtenu à l'étape (a) ci-dessus avec 0,2614 g de dicyclopentadiényl-dichloro-zirconium à 70 °C pendant 16 h sous azote.
   Le mélange ainsi obtenu est appelé mélange 9b dans la suite.
c) Incorporation d'un agent ionisant (triphénylcarbénium tétrakispentafluorophénylborate) :
   3,5 g du mélange 9b ont été ajoutés à 0,230 g de triphénylcarbénium tétrakispentafluorophénylborate. L'ensemble a été agité à température ambiante pendant 13 heures. Le solide catalytique ainsi obtenu a été récupéré.
d) Polymérisation d'éthylène :
   Dans un autoclave de 3 litres, préalablement séché et muni d'un agitateur, on a introduit 321 mg du solide catalytique préparé lors de l'étape (c) décrite ci-dessus et 1 litre d'isobutane. L'autoclave a été chauffé à 60 °C, température qui a été maintenue pendant toute la durée de l'essai. Lorsque la température de consigne a été atteinte, de l'éthylène et de l'hydrogène ont été introduits dans l'autoclave à des pressions partielles de, respectivement, 10 et 0,2 bar. 0,3 ml d'une solution d'hexane contenant 50 g/l de triméthylaluminium ont alors été introduits dans l'autoclave avec 100 ml d'isobutane à 40 bars. Au cours de la réaction, la pression totale a été maintenue par ajout d'éthylène dans l'autoclave. Après 2 heures, la polymérisation a été arrêtée par dégazage et refroidissement de l'autoclave. 374 g de polymère ont été recueillis. Le polyéthylène est caractérisé par MI5 = 0,1 g/10 min. et HLMI = 1,7 g/10 min.

### Exemple 10 (conforme à l'invention)

a) Préparation du solide catalytique :
   2,1 g du mélange 9b ont été mélangés avec 0,137 g de triphénylcarbénium tétrakispentafluorophénylborate dans 10 ml de CH₂Cl₂. Après 10 minutes d'agitation, le CH₂Cl₂ a été éliminé par distillation sous pression réduite à température ambiante. Le solide catalytique a alors été récupéré.
b) Polymérisation d'éthylène :
   Dans un autoclave de 3 litres, préalablement séché et muni d'un agitateur, on a introduit 343 mg du solide catalytique préparé lors de l'étape (a) décrite ci-dessus et 1 litre d'isobutane. L'autoclave a été chauffé à 60 °C, température qui a été maintenue pendant toute la durée de l'essai. Lorsque la température de consigne a été atteinte, de l'éthylène et de l'hydrogène ont été introduits dans l'autoclave à des pressions partielles de, respectivement, 10 et 0,2 bar. 0,3 ml d'une solution d'hexane contenant 50 g/l de triméthylaluminium ont alors été introduits dans l'autoclave avec 100 ml d'isobutane à 40 bars. Au cours de la réaction, la pression totale a été maintenue par ajout d'éthylène dans l'autoclave. Après 2 heures, la polymérisation a été arrêtée par dégazage et refroidissement de l'autoclave.
   110 g de polymère ont été recueillis. Le polyéthylène est caractérisé par HLMI = 0,6 g/10 min.

### Exemple 11 (conforme à l'invention)

a) Préparation du solide catalytique :
   1,7 g du mélange 9b ont été mélangés avec 0,111 g de triphénylcarbénium tétrakispentafluorophénylborate dans 10 ml de toluène. Après 10 minutes d'agitation, le toluène a été éliminé par distillation sous pression réduite à température ambiante. Le solide catalytique a alors été récupéré.
b) Polymérisation d'éthylène :
   Dans un autoclave de 3 litres, préalablement séché et muni d'un agitateur, on a introduit 376 mg du solide catalytique préparé lors de l'étape (a) décrite ci-dessus et 1 litre d'isobutane. L'autoclave a été chauffé à 60 °C, température qui a été maintenue pendant toute la durée de l'essai. Lorsque la température de polymérisation a été atteinte, de l'éthylène et de l'hydrogène ont été introduits dans l'autoclave à des pressions partielles de, respectivement, 10 et 0,2 bar. 0,3 ml d'une solution d'hexane contenant 50 g/l de triméthylaluminium ont alors été introduits dans l'autoclave avec 100 ml d'isobutane à 40 bars. Au cours de la réaction, la pression totale a été maintenue par ajout d'éthylène dans l'autoclave. Après 2 heures, la polymérisation a été arrêtée par dégazage et refroidissement de l'autoclave. 114 g de polymère ont été recueillis. Le polyéthylène est caractérisé par MI2 < 0,1 g/10 min. et HLMI = 18,9 g/10 min.

## Revendications

1. Solide catalytique pour la (co)polymérisation d'éthylène comprenant au moins un support inorganique, au moins un métallocène d'un métal de transition, au moins un agent ionisant différent d'un aluminoxane et au moins un composé d'un métal du groupe VIB du tableau périodique.

2. Solide catalytique selon la revendication 1, dans lequel l'agent ionisant est choisi parmi les composés ioniques comprenant un cation qui présente les propriétés d'un acide de Lewis, et un anion, et parmi les composés nonioniques qui ionisent le métallocène en métallocène cationique.

3. Solide catalytique selon la revendication 2, dans lequel l'agent ionisant est choisi parmi le triphénylcarbénium tétrakis(pentafluorophényl)borate et le tri(pentafluorophényl)bore.

4. Solide catalytique selon l'une quelconque des revendications 1 à 3, dans lequel le métallocène est de formule (Cₚ)ₐ(Cₚ')_{b}MXₓZ_{z}, dans laquelle
- Cₚ et Cₚ' désignent chacun un radical hydrocarboné insaturé coordiné à l'atome central M, les groupes Cₚ et Cₚ' pouvant être liés par un pont covalent,
- M désigne le métal de transition, qui est choisi parmi les groupes IIIB, IVB, VB et VIB du tableau périodique,
- a, b, x et z désignent des nombres entiers tels que (a + b + x + z) = m, x > 0, z ≥ 0 et a et/ou b ≠ 0,
- m désigne la valence du métal de transition M,
- X désigne un halogène, et
- Z désigne un radical hydrocarboné pouvant éventuellement comprendre de l'oxygène ou un radical silyl de formule (-Rₜ-Si-R'R"R‴) où
- R désigne un groupe alkyle, alkényle, aryle, alkoxy ou cycloalkyle éventuellement substitué comprenant jusqu'à 20 atomes de carbone,
- R', R" et R"' sont identiques ou différents et désignent chacun un halogène ou un groupe alkyle, alkényle, aryle, alkoxy ou cycloalkyle éventuellement substitué comprenant jusqu'à 20 atomes de carbone,
- t désigne 0 ou 1.

5. Solide catalytique selon l'une quelconque des revendications 1 à 4, dans lequel le métal du groupe VIB du tableau périodique est le chrome.

6. Solide catalytique selon l'une quelconque des revendications 1 à 5, dans lequel le métallocène et le composé d'un métal du groupe VIB sont présents dans des quantités telles que le rapport molaire métal du groupe VIB/métal de transition soit de 0,001 à 100.

7. Solide catalytique selon l'une quelconque des revendications 1 à 6, dans lequel le support est sélectionné parmi la silice, l'alumine, le dichlorure de magnésium, le phosphate d'aluminium et les mélanges de silice, d'alumine et de phosphate d'aluminium.

8. Procédé de préparation d'un solide catalytique conforme à l'une quelconque des revendications 1 à 7, selon lequel on prépare, dans une première étape, un solide comprenant un support inorganique et un composé d'un métal du groupe VIB du tableau périodique et on y incorpore, dans une deuxième étape, un composé à base d'un métallocène de métal de transition et un composé à base d'un agent ionisant.

9. Procédé selon la revendication 8, dans lequel la première étape est réalisée au moyen d'un mélange mécanique d'un support inorganique avec un composé solide d'un métal du groupe VIB en l'absence d'un liquide, suivi d'une préactivation du mélange à une température inférieure à la température de fusion du composé d'un métal du groupe VIB et d'une activation en chauffant le mélange préactivé à une température de 400 à 1000 °C pour transformer une partie au moins du métal en métal hexavalent.

10. Procédé selon la revendication 8 ou 9, dans lequel le composé à base d'un métallocène et le composé à base d'un agent ionisant sont incorporés successivement en mélangeant d'abord le solide comprenant un support et un composé d'un métal du groupe VIB avec un composé à base d'un métallocène en l'absence d'un liquide et ensuite en imprégnant le mélange ainsi obtenu avec une solution d'un composé à base d'un agent ionisant.

11. Système catalytique pour la (co)polymérisation d'éthylène obtenu par mise en contact de :
(a) un solide catalytique conforme à l'une quelconque des revendications 1 à 7, avec
(b) au moins un cocatalyseur sélectionné parmi les composés organométalliques d'un métal choisi parmi les groupes IA, IIA, IIB, IIIA et IVA du tableau périodique.

12. Système catalytique selon la revendication 11, dans lequel le composé organométallique est choisi parmi les composés organoaluminiques de formule AlTT'T'' dans laquelle les groupes T, T' et T'' désignent chacun un groupe alkyle, alkényle, aryle ou alkoxy, éventuellement substitué, contenant jusqu'à 20 atomes de carbone.

13. Procédé de (co)polymérisation d'éthylène dans lequel on utilise un système catalytique conforme à l'une quelconque la revendication 11 ou 12.

## Claims

1. Catalytic solid for the (co)polymerization of ethylene, comprising at least one inorganic support, at least one transition metal metallocene, at least one ionizing agent different from an aluminoxane and at least one compound of a metal from group VIB of the Periodic Table.

2. Catalytic solid according to Claim 1, in which the ionizing agent is chosen from ionic compounds comprising a cation which has the properties of a Lewis acid, and an anion, and from nonionic compounds which ionize the metallocene into a cationic metallocene.

3. Catalytic solid according to Claim 2, in which the ionizing agent is chosen from triphenylcarbenium tetrakis(pentafluorophenyl)borate and tris(pentafluorophenyl)boron.

4. Catalytic solid according to any one of Claims 1 to 3, in which the metallocene is of the formula (Cₚ)ₐ(Cₚ')_{b}MXₓZ_{z}, in which
- Cp and Cp' each denote an unsaturated hydrocarbon radical coordinated to the central atom M, it being possible for the groups Cₚ and Cₚ' to be linked via a covalent bridge,
- M denotes the transition metal, which is chosen from groups IIIB, IVB, VB and VIB of the Periodic Table,
- a, b, x and z denote integers such that (a + b + x + z ) = m, x > 0, z ≥ 0 and a and/or b ≠ 0,
- m denotes the valency of the transition metal M,
- X denotes a halogen, and
- Z denotes a hydrocarbon radical which may optionally comprise oxygen or a silyl radical of formula (-Rₜ-Si-R'R"R‴) where
- R denotes an optionally substituted alkyl, alkenyl, aryl, alkoxy or cycloalkyl group comprising up to 20 carbon atoms,
- R', R" and R"' are identical or different and each denote a halogen or an optionally substituted alkyl, alkenyl, aryl, alkoxy or cycloalkyl group comprising up to 20 carbon atoms,
- t denotes 0 or 1.

5. Catalytic solid according to any one of Claims 1 to 4, in which the metal from group VIB of the Periodic Table is chromium.

6. Catalytic solid according to any one of Claims 1 to 5, in which the metallocene and the group VIB metal compound are present in amounts such that the group VIB metal/transition metal molar ratio is from 0.001 to 100.

7. Catalytic solid according to any one of Claims 1 to 6, in which the support is selected from silica, alumina, magnesium dichloride, aluminium phosphate and mixtures of silica, alumina and aluminium phosphate.

8. Process for the preparation of a catalytic solid in accordance with any one of Claims 1 to 7, according to which, in a first step, a solid comprising an inorganic support and a compound of a metal from group VIB of the Periodic Table is prepared and, in a second step, a compound based on a transition metal metallocene and a compound based on an ionizing agent are incorporated therein.

9. Process according to Claim 8, in which the first step is performed by means of mechanical mixing of an inorganic support with a solid compound of a group VIB metal in the absence of a liquid, followed by a pre-activation of the mixture at a temperature below the melting point of the group VIB metal compound and an activation by heating the preactivated mixture to a temperature of 400 to 1000°C in order to convert at least some of the metal into hexavalent metal.

10. Process according to Claim 8 or 9, in which the metallocene-based compound and the compound based on an ionizing agent are successively incorporated by first mixing the solid comprising a support and a group VIB metal compound with a metallocene-based compound in the absence of a liquid, followed by impregnating the mixture thus obtained with a solution of a compound based on an ionizing agent.

11. Catalytic system for the (co)polymerization of ethylene obtained by placing:
a) a catalytic solid in accordance with any one of Claims 1 to 7, in contact with
b) at least one cocatalyst selected from organometallic compounds of a metal chosen from groups IA, IIA, IIB, IIIA and IVa of the Periodic Table.

12. Catalytic system according to Claim 11, in which the organometallic compound is chosen from organoaluminium compounds of formula AlTT'T" in which the groups T, T' and T" each denote an alkyl, alkenyl, aryl or alkoxy group, optionally substituted, containing up to 20 carbon atoms.

13. Process for the (co)polymerization of ethylene in which a catalytic system in accordance with either of Claims 11 and 12 is used.

## Patentansprüche

1. Katalytischer Feststoff für die (Co)polymerisation von Ethylen, der wenigstens einen anorganischen Träger, wenigstens ein Metallocen eines Übergangsmetalls, wenigstens ein lonisierungsmittel, das von Aluminoxan verschieden ist, und wenigstens eine Verbindung eines Metalls der Gruppe VIB des Periodensystems umfaßt.

2. Katalytischer Feststoff gemäß Anspruch 1, bei dem das lonisierungsmittel unter den ionischen Verbindungen, die ein Kation, das die Eigenschaften einer Lewissäure aufweist, und ein Anion umfassen, und unter den nichtionischen Verbindungen ausgewählt ist, die das Metallocen zu kationischem Metallocen ionisieren.

3. Katalytischer Feststoff gemäß Anspruch 2, bei dem das lonisierungsmittel unter Triphenylcarbenium-tetrakis(pentafluorphenyl)borat und Tri(pentafluorphenyl)boran ausgewählt ist.

4. Katalytischer Feststoff gemäß einem der Ansprüche 1 bis 3, bei dem das Metallocen die Formel (Cₚ)ₐ(Cₚ')_{b}MXₓZ_{z} hat, in der
- Cp und Cp' jedes einen an das Zentralatom M koordinierten ungesättigten Kohlenwasserstoffrest bezeichnen, wobei die Gruppen Cₚ und Cₚ' durch eine kovalente Brücke verbunden sein können,
- M das Übergangsmetall bezeichnet, das unter den Gruppen IIIB, IVB, VB und VIB des Periodensystems ausgewählt ist,
- a, b, x und z solche ganze Zahlen bezeichen, daß (a + b + x + z) = m, x > 0, z ≥ 0 und a und/oder b ≠ 0,
- m die Wertigkeit des Übergangsmetalls M bezeichnet,
- X ein Halogen bezeichnet und
- Z einen Kohlenwasserstoffrest, der gegebenenfalls Sauerstoff umfassen kann, oder einen Silylrest der Formel (-Rₜ-Si-R'R"R‴) bezeichnet, worin
- R eine gegebenenfalls substituierte Alkyl-, Alkenyl-, Aryl-, Alkoxy- oder Cycloalkylgruppe bezeichnet, die bis zu 20 Kohlenstoffatome umfaßt,
- R', R" und R‴ gleich oder verschieden sind und jedes ein Halogen oder eine gegebenenfalls substituierte Alkyl-, Alkenyl-, Aryl-, Alkoxy- oder Cycloalkylgruppe bezeichnen, die bis zu 20 Kohlenstoffatome umfaßt,
- t 0 oder 1 bezeichnet.

5. Katalytischer Feststoff gemäß einem der Ansprüche 1 bis 4, bei dem das Metall der Gruppe VIB des Periodensystems Chrom ist.

6. Katalytischer Feststoff gemäß einem der Ansprüche 1 bis 5, bei dem das Metallocen und die Verbindung eines Metalls der Gruppe VIB in solchen Mengen vorhanden sind, daß das Molverhältnis Metall der Gruppe VIB / Übergangsmetall 0,001 bis 100 ist.

7. Katalytischer Feststoff gemäß einem der Ansprüche 1 bis 6, bei dem der Träger unter Siliciumdioxid, Aluminiumoxid, Magnesiumdichlorid, Aluminiumphosphat und den Gemischen von Siliciumdioxid, Aluminiumoxid und Aluminiumphosphat ausgewählt ist.

8. Verfahren zur Herstellung eines katalytischen Feststoffs gemäß einem der Ansprüche 1 bis 7, gemäß dem man in einem ersten Schritt einen Feststoff herstellt, der einen anorganischen Träger und eine Verbindung eines Metalls der Gruppe VIB des Periodensystems umfaßt, und man in einem zweiten Schritt dazu eine Verbindung auf der Basis eines Übergangsmetall-Metallocens und eine Verbindung auf der Basis eines lonisierungsmittels zusetzt.

9. Verfahren gemäß Anspruch 8, bei dem der erste Schritt mittels eines mechanischen Mischens eines anorganischen Trägers. mit einer festen Verbindung eines Metalls der Gruppe VIB in Abwesenheit einer Flüssigkeit durchgeführt wird, gefolgt von einer Voraktivierung des Gemischs bei einer Temperatur, die niedriger als die Schmelztemperatur der Verbindung eines Metalls der Gruppe VIB ist, und einer Aktivierung unter Erhitzen des voraktivierten Gemischs auf eine Temperatur von 400 bis 1000 °C, um wenigstens einen Teil des Metalls in sechswertiges Metall zu überführen.

10. Verfahren gemäß Anspruch 8 oder 9, bei dem die Verbindung auf der Basis eines Metallocens und die Verbindung auf der Basis eines Ionisierungsmittels nacheinander zugesetzt werden, indem zuerst der Feststoff, der einen Träger und eine Verbindung eines Metalls der Gruppe VIB umfaßt, mit einer Verbindung auf der Basis eines Metallocens in Abwesenheit einer Flüssigkeit gemischt wird und indem das so erhaltene Gemisch danach mit einer Lösung einer Verbindung auf der Basis eines lonisierungsmittels getränkt wird.

11. Katalytisches System für die (Co)polymerisation von Ethylen, das erhalten wird durch Inkontaktbringen von:
(a) einem katalytischen Feststoff gemäß einem der Ansprüche 1 bis 7 mit
(b) wenigstens einem Cokatalysator, der unter den metallorganischen Verbindungen eines unter den Gruppen IA, IIA, IIB, IIIA und IVA des Periodensystems ausgewählten Metalls ausgewählt ist.

12. Katalytisches System gemäß Anspruch 11, bei dem die metallorganische Verbindung unter den aluminiumorganischen Verbindungen der Formel AITT'T", in der die Gruppen T, T' und T" jede eine gegebenenfalls substituierte Alkyl-, Alkenyl-, Aryl- oder Alkoxygruppe bezeichnen, die bis zu 20 Kohlenstoffatome enthält, ausgewählt ist.

13. Verfahren zur (Co)polymerisation von Ethylen, bei dem man ein katalytisches System gemäß einem der Ansprüche 11 oder 12 verwendet.
